# EUROPEAN PATENT SPECIFICATION

(11) **EP 4 156 011 B1**
(45) Date of publication and mention of the grant of the patent: **25.03.2026**
(21) Application number: 22188875.3
(22) Date of filing: 04.08.2022
(51) Int. Cl.: G06F 21/73, G06F 12/14, G06F 13/42, G06F 21/44, G06F 21/64, G06F 21/79

(54) **METHOD AND APPARATUS TO AUTHENTICATE A MEMORY MODULE**
VERFAHREN UND VORRICHTUNG ZUM AUTHENTIFIZIEREN EINES SPEICHERMODULS
PROCÉDÉ ET APPAREIL POUR AUTHENTIFIER UN MODULE DE MÉMOIRE

(30) Priority: 24.09.2021 US 202117484252
(43) Date of publication of application: 29.03.2023
(73) Proprietor: INTEL Corporation, Santa Clara, CA 95054 (US)
(72) Inventor: CONTRERAS-MUNOZ, Gustavo K., Westborough, 01581 (US); MAKARAM, Raghunandan, Northborough, 01532 (US); VERGIS, George, Portland, 97229 (US)
(74) Representative: Rummler, Felix

(56) References cited:
- US-A1- 2021 224 201
- DASARI SATVIK ET AL: "Aegis: A Framework to Detect Compromised Components in the Supply Chain of Information Technology Infrastructure", 2020 INTERNATIONAL WORKSHOP ON BIG DATA AND INFORMATION SECURITY (IWBIS), IEEE, 17 October 2020 (2020-10-17), pages 159 - 164, XP033860824, DOI: 10.1109/IWBIS50925.2020.9255660

## Description

### FIELD

This disclosure relates to memory modules and in particular to authentication of memory modules.

### BACKGROUND

A memory module is a printed circuit board on which memory integrated circuits ("chips") are mounted to another printed circuit board, such as a motherboard, via a connector (also referred to as a "socket"). The connector is installed on the motherboard and a memory module is inserted into the connector. The connector enables interconnection between a memory module and a circuit on the motherboard. A dual in-line memory module (DIMM) has separate electrical contacts on each side of the memory module.
In addition to memory integrated circuits, the memory module can include a serial presence detect (SPD) integrated circuit ("chip"). The SPD integrated circuit stores information about the memory module including the type of memory integrated chips on the memory module, manufacturer, serial number and timing parameters to be used by a memory controller to access the memory integrated chips. The information stored in the SPD integrated circuit can be read by a Built In Operating System (BIOS) during power up of a system to configure a memory controller to use the memory integrated circuits on the DIMM. DASARI SATVIK ET AL: "Aegis: A Framework to Detect Compromised Components in the Supply Chain of Information Technology Infrastructure", 2020 INTERNATIONAL WORKSHOP ON BIG DATA AND INFORMATION SECURITY (IWBIS), IEEE, 17 October 2020 (2020-10-17), pages 159-164, XP033860824, DOI: 10.1109/IWBIS50925.2020.9255660 discloses is a white paper describing Aegis, used to detect supply chain compromised components in a PC. The TPM of the motherboard is used to store a certificate containing the fingerprint of the different components. Hashes of FW may be integrated in a birth certificate created in the fab and linked to the TPM Endorsement Key, both link and certificate verification is done at runtime to deter DIMM swapping or removal.
US 2021/224201 A1 (SANDBERG ANDREAS LARS [GB] ET AL) 22 July 2021 (2021-07-22) discloses the protection of data being written and read to/from memory, using encryption and integrity verification. An authentication of the memory module and its manufacturer is done using a certificate chain and a challenge-response protocol. The configuration chip (accessible through a sideband I2C bus) communicate with the DRAM modules (up to 8 or 16) on an internal bus. The certificate may be stored on a server or in the memory configuration chip.

### BRIEF DESCRIPTION OF THE DRAWINGS

Features of embodiments of the claimed subject matter will become apparent as the following detailed description proceeds, and upon reference to the drawings, in which like numerals depict like parts, and in which:
Fig. 1 is a block diagram of a memory module 100 that includes a plurality of Dynamic Random Access Memory (DRAM) chips;
Fig. 2 is a block diagram of an embodiment of a system with a memory subsystem including at least one memory module coupled to a memory controller;
FIG. 3 illustrates an example of a certificate chain for a DIMM;
FIG. 4 is a block diagram illustrating the organization of SPD data stored in the SPD hub;
FIG. 5 is a block diagram illustrating an example of the SPD data stored in the first three bytes of block 0 in SPD data shown in FIG. 4.
FIG. 6 is a block diagram illustrating an example of the SPD data stored in bytes 320-383 in block 2;
FIG. 7 is a block diagram illustrating the SPD hub, RCD and sideband bus in the memory module shown in FIG. 1;
FIG. 8 is a flowgraph illustrating a method to generate an Attribute Serial Number for the memory module;
FIG. 9 is a flowgraph illustrating a method to measure the SPD Hub and components in the memory module to authenticate and attest the DIMM;
Fig. 10 is a block diagram of an embodiment of a computer system that includes memory module.

The invention is defined by the attached independent claims, different embodiments are given in the dependent claims.

### DESCRIPTION OF EMBODIMENTS

Memory performance issues could occur if the information stored in the SPD integrated circuit (also referred to as a SPD hub) is modified to misrepresent parameters of the memory chips and/or the memory chips in the DIMM are replaced with memory chips with different parameters. For example, one of the most common issues with a counterfeited DIMM is misrepresentation, where a DIMM's SPD Hub is tampered to represent higher DRAM capacity or frequencies.

Attestation for a DIMM ensures the authenticity and integrity of the DIMM and its components. For DIMM attestation, a host requests evidence in the form of certificates from the DIMM. Certificates are tied to a root-of-trust and cryptographically signed so they can be used to verify the legitimacy of the DIMM. Once verified, the host assesses trustworthiness of the DIMM and its components. This trustworthiness assessment by the host is necessary for confidential computing because secure workloads need to be able to trust the devices that store and manage the data to ensure confidentiality and integrity.

Data stored in the SPD hub (also referred to as SPD hub content) includes information (attributes) about the DIMM including the type of memory integrated chips on the DIMM, manufacturer of the DIMM, serial number identifiers and timing parameters to be used by a memory controller to access the memory integrated chips on the DIMM.

After manufacturing, a cryptographic hash that is created based only on serial number identifiers will be static and will not change if the DIMM is misrepresented or if DRAM chips are swapped through chip recycling black markets. The SPD Hub content is included as part of a cryptographic hash to generate an attribute serial number for the memory module. The cryptographic hash can also include serial number identifiers for components on the DIMM.

A cryptographic hash based on the SPD Hub content and serial number identifiers for components on the DIMM provides the ability to mitigate various supply chain attacks by binding the SPD Hub content to the DIMM certificate that is used for authentication. Based on the cryptographic signatures, a certificate is trusted by the platform so the binding of the SPD hub content to the DIMM certificate creates a secure way to ensure the components on the DIMM have not been tampered with and that the reported attributes of the DIMM are correct.

The Distributed Management Task Force(DMTF) Security Protocol and Data Model (SPDM) Specification defines messages, data objects, and sequences for performing message exchanges between devices over a variety of transport and physical media. The description of message exchanges includes authentication of hardware identities and measurement for firmware identities. The SPDM GET_MEASUREMENTS request and MEASUREMENT response can be used to authenticate and attest the DIMM.

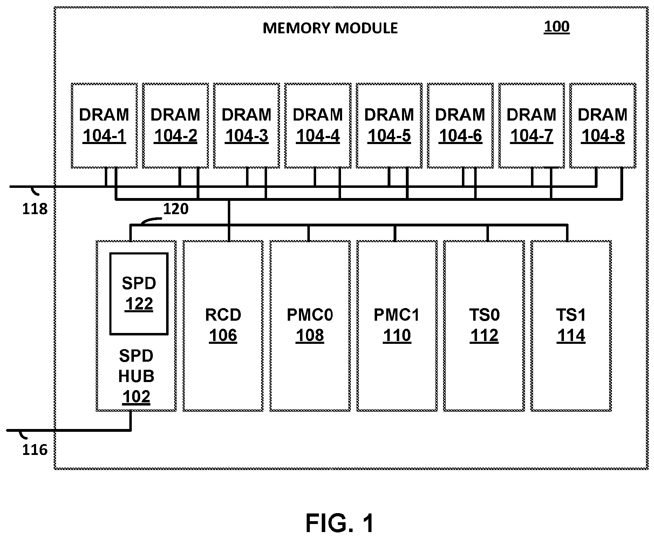

Fig. 1 is a block diagram of a memory module 100 that includes a plurality of Dynamic Random Access Memory (DRAM) chips 104-1,..., 104-8. A host system communicates with the DRAM chips 104-1,..., 104-8 via a host memory bus, DRAM bus 118.

The memory module 100 communicates with a host system via a sideband bus 116. The sideband bus 116 as described herein may be compatible with the JESD403-1 JEDEC (Joint Electronic Device Engineering Council) Module Sideband Bus standard that is a subset and superset of the MIPI^{®} Alliance I3C Basic^{™} serial bus standard.

The memory module 100 has two temperature sensors (TS), a first temperature sensor TS0 112 and a second temperature sensor TS1 114, to measure the temperature of the DRAM chips 104-1,..., 104-8 on the memory module 100. The memory module 100 includes two Power Management ICs (PMICs) 108 and 110, a Registering Clock Driver (RCD) 106, and a Sideband Bus Device Hub (SPD Hub) 102 that includes a Serial Presence Detect (SPD) device 122 which acts as the SPD to redrive the sideband bus 116 to a local bus 120 for the Power Management IC (PMICs) 108, 110, a Registering Clock Driver (RCD) 106 and the first temperature sensor TS0 112 and the second temperature sensor TS1 114.

In another embodiment, memory module 100 can include a plurality of non-volatile memory integrated circuits or persistent memory integrated circuits, for example, a three dimensional byte accessible non-volatile memory .

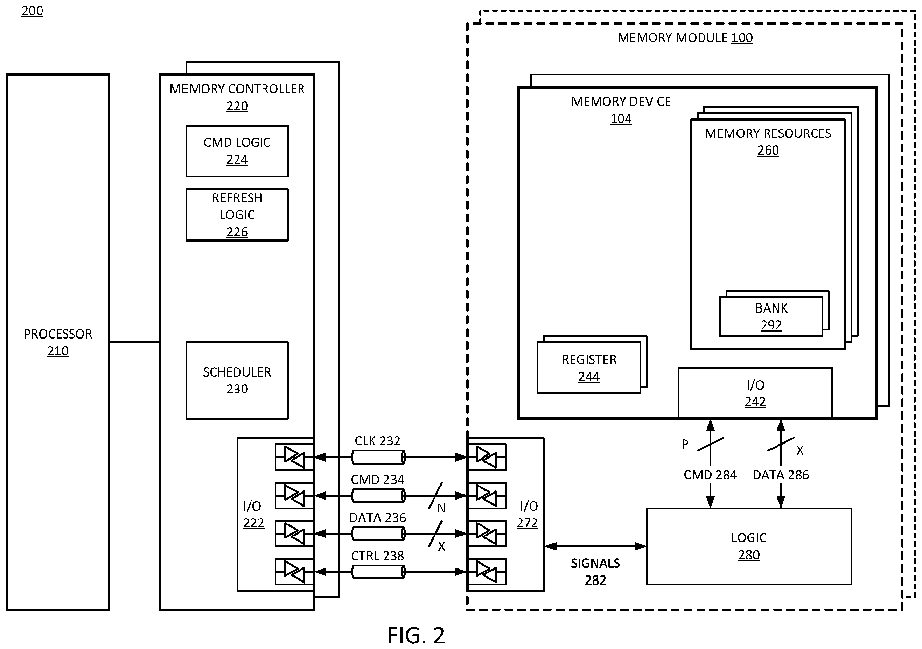

Fig. 2 is a block diagram of an embodiment of a system 200 with a memory subsystem including at least one memory module 100 coupled to a memory controller 220. System 200 includes a processor 210 and elements of a memory subsystem in a computing device. Processor 210 represents a processing unit of a computing platform that can execute an operating system (OS) and applications, which can collectively be referred to as the host or user of the memory. The OS and applications execute operations that result in memory accesses. Processor 210 can include one or more separate processors. Each separate processor can include a single processing unit, a multicore processing unit, or a combination. The processing unit can be a primary processor such as a CPU (central processing unit), a peripheral processor such as a GPU (graphics processing unit), or a combination. Memory accesses may also be initiated by devices such as a network controller or storage controller. Such devices can be integrated with the processor in some systems (for example, in a System-on-Chip (SoC)) or attached to the processer via a bus (e.g., PCI express), or a combination.

Reference to memory devices can apply to different memory types. Memory devices often refers to volatile memory technologies. Volatile memory is memory whose state (and therefore the data stored on it) is indeterminate if power is interrupted to the device. Dynamic volatile memory requires refreshing the data stored in the device to maintain state. Nonvolatile memory refers to memory whose state is determinate even if power is interrupted to the device.

One example of dynamic volatile memory incudes DRAM (Dynamic Random Access Memory), or some variant such as Synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, originally published in September 2012 by JEDEC), DDR5 (DDR version 5, originally published in July 2020), LPDDR3 (Low Power DDR version 3, JESD209-3B, August 2013 by JEDEC), LPDDR4 (LPDDR version 4, JESD209-4, originally published by JEDEC in August 2014), LPDDR5 (LPDDR version 5, JESD209-5A, originally published by JEDEC in January 2020), WIO2 (Wide Input/Output version 2, JESD229-2 originally published by JEDEC in August 2014), HBM (High Bandwidth Memory, JESD235, originally published by JEDEC in October 2013), HBM2 (HBM version 2, JESD235C, originally published by JEDEC in January 2020), or HBM3 (HBM version 3 currently in discussion by JEDEC), or others or combinations of memory technologies, and technologies based on derivatives or extensions of such specifications. The JEDEC standards are available at www.jedec.org.

Descriptions herein referring to a "RAM" or "RAM device" can apply to any memory device that allows random access, whether volatile or nonvolatile. Descriptions referring to a "DRAM" or a "DRAM device" can refer to a volatile random access memory device. The memory device or DRAM can refer to the die itself, to a packaged memory product that includes one or more dies, or both. In one embodiment, a system with volatile memory that needs to be refreshed can also include nonvolatile memory.

A non-volatile memory (NVM) device is a type of memory whose state is determinate even if power is interrupted to the device. In one embodiment, the NVM device may include block or byte-addressable, write-in-place memories. Examples may include, but are not limited to, single or multi-level Phase Change Memory (PCM) or phase change memory with a switch (PCMS), non-volatile types of memory that include chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other types of block or byte-addressable, write-in-place memory.

Memory controller 220 represents one or more memory controller circuits or devices for system 200. Memory controller 220 represents control logic that generates memory access commands in response to the execution of operations by processor 210. Memory controller 220 accesses one or more memory devices 104. Memory devices 104 can be DRAM devices in accordance with any referred to above. Memory controller 220 includes I/O interface logic 222 to couple to a memory bus that can be the DRAM bus 118. I/O interface logic 222 (as well as I/O interface logic 242 of memory device 104) can include pins, pads, connectors, signal lines, traces, or wires, or other hardware to connect the devices, or a combination of these. I/O interface logic 222 can include a hardware interface. As illustrated, I/O interface logic 222 includes at least drivers/transceivers for signal lines. Commonly, wires within an integrated circuit interface couple with a pad, pin, or connector to interface signal lines or traces or other wires between devices. I/O interface logic 222 can include drivers, receivers, transceivers, or termination, or other circuitry or combinations of circuitry to exchange signals on the signal lines between the devices.

The exchange of signals includes at least one of transmit or receive. While shown as coupling I/O interface logic 222 from memory controller 220 to I/O interface logic 242 of memory device 104, it will be understood that in an implementation of system 200 where groups of memory devices 104 are accessed in parallel, multiple memory devices can include I/O interfaces to the same interface of memory controller 220. In an implementation of system 200 including one or more memory modules 100, I/O interface logic 242 can include interface hardware of the memory module in addition to interface hardware on the memory device itself. Other memory controllers 220 can include separate interfaces to other memory devices 104.

The bus between memory controller 220 and memory devices 104 can be a double data rate (DDR) high-speed DRAM interface to transfer data that is implemented as multiple signal lines coupling memory controller 220 to memory devices 104. The bus may typically include at least clock (CLK) 232, command/address (CMD) 234, and data (write data (DQ) and read data (DQ0) 236, and zero or more control signal lines 238. In one embodiment, a bus or connection between memory controller 220 and memory can be referred to as a memory bus. The signal lines for CMD can be referred to as a "C/A bus" (or ADD/CMD bus, or some other designation indicating the transfer of commands (C or CMD) and address (A or ADD) information) and the signal lines for data (write DQ and read DQ) can be referred to as a "data bus." It will be understood that in addition to the lines explicitly shown, a bus can include at least one of strobe signaling lines, alert lines, auxiliary lines, or other signal lines, or a combination. It will also be understood that serial bus technologies can be used for the connection between memory controller 220 and memory devices 104. An example of a serial bus technology is 8B10B encoding and transmission of high-speed data with embedded clock over a single differential pair of signals in each direction.

In one embodiment, one or more of CLK 232, CMD 234, Data 236, or control 238 can be routed to memory devices 104 through logic 280. Logic 280 can be or include a register or buffer circuit. Logic 280 can reduce the loading on the interface to I/O interface 222, which allows faster signaling or reduced errors or both. The reduced loading can be because I/O interface 222 sees only the termination of one or more signals at logic 280, instead of termination of the signal lines at every one or memory devices 104 in parallel. While I/O interface logic 242 is not specifically illustrated to include drivers or transceivers, it will be understood that I/O interface logic 242 includes hardware necessary to couple to the signal lines. Additionally, for purposes of simplicity in illustrations, I/O interface logic 242 does not illustrate all signals corresponding to what is shown with respect to I/O interface 222. In one embodiment, all signals of I/O interface 222 have counterparts at I/O interface logic 242. Some or all of the signal lines interfacing I/O interface logic 242 can be provided from logic 280. In one embodiment, certain signals from I/O interface 222 do not directly couple to I/O interface logic 242, but couple through logic 280, while one or more other signals may directly couple to I/O interface logic 242 from I/O interface 222 via I/O interface 272, but without being buffered through logic 280. Signals 282 represent the signals that interface with memory devices 104 through logic 280.

It will be understood that in the example of system 200, the bus between memory controller 220 and memory devices 104 includes a subsidiary command bus CMD 234 and a subsidiary data bus 236. In one embodiment, the subsidiary data bus 236 can include bidirectional lines for read data and for write/command data. In another embodiment, the subsidiary data bus 236 can include unidirectional write signal lines for write and data from the host to memory, and can include unidirectional lines for read data from the memory device 104 to the host. In accordance with the chosen memory technology and system design, control signals 238 may accompany a bus or sub bus, such as strobe lines DQS. Based on design of system 200, or implementation if a design supports multiple implementations, the data bus can have more or less bandwidth per memory device 104. For example, the data bus can support memory devices 104 that have either a x32 interface, a x16 interface, a x8 interface, or another interface. The convention "xW," where W is an integer that refers to an interface size or width of the interface of memory device 104, which represents a number of signal lines to exchange data with memory controller 220. The number is often binary, but is not so limited. The interface size of the memory devices is a controlling factor on how many memory devices can be used concurrently in system 200 or coupled in parallel to the same signal lines. In one embodiment, high bandwidth memory devices, wide interface devices, or stacked memory configurations, or combinations, can enable wider interfaces, such as a x128 interface, a x256 interface, a x512 interface, a x1024 interface, or other data bus interface width.

Memory devices 104 represent memory resources for system 200. In one embodiment, each memory device 104 is a separate memory die. Each memory device 104 includes I/O interface logic 242, which has a bandwidth determined by the implementation of the device (e.g., x16 or x8 or some other interface bandwidth). I/O interface logic 242 enables each memory device 104 to interface with memory controller 220. I/O interface logic 242 can include a hardware interface, and can be in accordance with I/O interface logic 222 of memory controller 220, but at the memory device end. In one embodiment, multiple memory devices 104 are connected in parallel to the same command and data buses. In another embodiment, multiple memory devices 104 are connected in parallel to the same command bus, and are connected to different data buses. For example, system 200 can be configured with multiple memory devices 104 coupled in parallel, with each memory device responding to a command, and accessing memory resources 260 internal to each. For a write operation, an individual memory device 104 can write a portion of the overall data word, and for a read operation, an individual memory device 104 can fetch a portion of the overall data word. As non-limiting examples, a specific memory device can provide or receive, respectively, 8 bits of a 128-bit data word for a Read or Write transaction, or 8 bits or 16 bits (depending for a x8 or a x16 device) of a 256-bit data word. The remaining bits of the word are provided or received by other memory devices in parallel.

In one embodiment, memory devices 104 can be organized into memory modules 100. In one embodiment, memory modules 100 represent dual inline memory modules (DIMMs). Memory modules 100 can include multiple memory devices 104, and the memory modules can include support for multiple separate channels to the included memory devices disposed on them.

Memory devices 104 each include memory resources 260. Memory resources 260 represent individual arrays of memory locations or storage locations for data. Typically, memory resources 260 are managed as rows of data, accessed via word line (rows) and bit line (individual bits within a row) control. Memory resources 260 can be organized as separate banks of memory. Banks may refer to arrays of memory locations within a memory device 104. In one embodiment, banks of memory are divided into sub-banks with at least a portion of shared circuitry (e.g., drivers, signal lines, control logic) for the sub-banks.

In one embodiment, memory devices 104 include one or more registers 244. Register 244 represents one or more storage devices or storage locations that provide configuration or settings for the operation of the memory device. In one embodiment, register 244 can provide a storage location for memory device 104 to store data for access by memory controller 220 as part of a control or management operation. In one embodiment, register 244 includes one or more Mode Registers. In one embodiment, register 244 includes one or more multipurpose registers. The configuration of locations within register 244 can configure memory device 104 to operate in different "mode," where command information can trigger different operations within memory device 104 based on the mode. Additionally, or in the alternative, different modes can also trigger different operation from address information or other signal lines depending on the mode. Settings of register 244 can indicate configuration for I/O settings (e.g., timing, termination, driver configuration, or other I/O settings).

Memory controller 220 includes scheduler 230, which represents logic or circuitry to generate and order transactions to send to memory device 104. From one perspective, the primary function of memory controller 220 is to schedule memory access and other transactions to memory device 104. Such scheduling can include generating the transactions themselves to implement the requests for data by processor 210 and to maintain integrity of the data (e.g., such as with commands related to refresh).

Transactions can include one or more commands, and result in the transfer of commands or data or both over one or multiple timing cycles such as clock cycles or unit intervals. Transactions can be for access such as read or write or related commands or a combination, and other transactions can include memory management commands for configuration, settings, data integrity, or other commands or a combination.

Memory controller 220 typically includes logic to allow selection and ordering of transactions to improve performance of system 200. Thus, memory controller 220 can select which of the outstanding transactions should be sent to memory device 104 in which order, which is typically achieved with logic much more complex than a simple first-in first-out algorithm. Memory controller 220 manages the transmission of the transactions to memory device 104, and manages the timing associated with the transaction. In one embodiment, transactions have deterministic timing, which can be managed by memory controller 220 and used in determining how to schedule the transactions.

Referring again to memory controller 220, memory controller 220 includes command (CMD) logic 224, which represents logic or circuitry to generate commands to send to memory devices 104. The generation of the commands can refer to the command prior to scheduling, or the preparation of queued commands ready to be sent. Generally, the signaling in memory subsystems includes address information within or accompanying the command to indicate or select one or more memory locations where the memory devices should execute the command. In response to scheduling of transactions for memory device 104, memory controller 220 can issue commands via I/O 222 to cause memory device 104 to execute the commands. Memory controller 220 can implement compliance with standards or specifications by access scheduling and control.

Referring again to logic 280, in one embodiment, logic 280 buffers certain signal 282 from the host to memory devices 104. In one embodiment, logic 280 buffers data signal lines 236 as data 286, and buffers command (or command and address) lines of CMD 234 as CMD 284. In one embodiment, data 286 is buffered, but includes the same number of signal lines as data 236. Thus, both are illustrated as having X signal lines. In contrast, CMD 234 has fewer signal lines than CMD 284. Thus, P>N. The N signal lines of CMD 234 are operated at a data rate that is higher than the P signal lines of CMD 284. For example, P can equal 2N, and CMD 284 can be operated at a data rate of half the data rate of CMD 234.

In one embodiment, memory controller 220 includes refresh logic 226. Refresh logic 226 can be used for memory resources 260 that are volatile and need to be refreshed to retain a deterministic state. In one embodiment, refresh logic 226 indicates a location for refresh, and a type of refresh to perform. Refresh logic 226 can execute external refreshes by sending refresh commands. For example, in one embodiment, system 200 supports all bank refreshes as well as per bank refreshes. All bank refreshes cause the refreshing of a selected bank 292 within all memory devices 104 coupled in parallel. Per bank refreshes cause the refreshing of a specified bank 292 within a specified memory device 104.

System 200 can include a memory circuit, which can be or include logic 280. To the extent that the circuit is considered to be logic 280, it can refer to a circuit or component (such as one or more discrete elements, or one or more elements of a logic chip package) that buffers the command bus. To the extent the circuit is considered to include logic 280, the circuit can include the pins of packaging of the one or more components, and may include the signal lines. The memory circuit includes an interface to the N signal lines of CMD 234, which are to be operated at a first data rate. The N signal lines of CMD 234 are host-facing with respect to logic 280. The memory circuit can also include an interface to the P signal lines of CMD 284, which are to be operated at a second data rate lower than the first data rate. The P signal lines of CMD 284 are memory-facing with respect to logic 280. Logic 280 can either be considered to be the control logic that receives the command signals and provides them to the memory devices, or can include control logic within it (e.g., its processing elements or logic core) that receive the command signals and provide them to the memory devices.

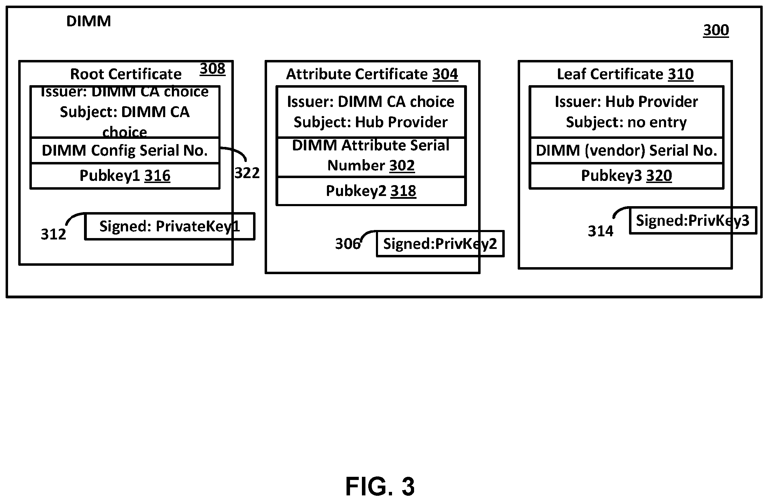

FIG. 3 illustrates an example of a certificate chain for a DIMM 300. Certificates in a device are used to verify the identity and provenance of the device. A certificate chain can be created to identify different layers (where a layer is a level in the hierarchy (root, intermediate, leaf) in a device that depend on each other, such as a pre-packaged design block, System-on-Chip (SoC), Platform, and firmware. A root certificate in a certificate chain is typically provided by trusted Certificate Authorities (CA) and is cryptographically signed with the Certificate Authority's private key. The public key of the trusted Certificate Authority is known and can be used by the entity verifying the certificate chain.

Each certificate (root, leaf, attribute certificate) in the chain includes a public key to verify the next certificate in the chain and an identifier that identifies the layer that the certificate represents. The identifier is typically generated through measurements (a raw value or cryptographic hash of raw values) of the layer and is dependent on the layer's properties. These measurements provide a unique value that identifies the layer. Examples of a layer's properties include configuration, version, revision, or code that can only be modified during manufacturing or through a manufacturer-controlled process.

The certificate chain for DIMM 300 includes a root certificate 308, an attribute certificate 304 and a leaf certificate 310. The root certificate 308, attribute certificate 304 and leaf certificate 310 are provisioned during the manufacturing of the DIMM. The root certificate private key 312 (private key 1) that is used to sign the root certificate 308 and the attribute certificate private key 306 (private key 2) are only known to the manufacturer and are not provisioned on the DIMM . Only the leaf certificate Private Key 3 314 is stored on the DIMM 300.

In the DIMM root certificate 308, the DIMM configuration serial number 322 identifies the DIMM revision and configuration and is unique per revision not per device. DIMMs with the same configuration and same revision have the same DIMM configuration serial number in the root certificate. The root certificate 308 includes Public Key 1 316 that is associated with Private Key 1 312. The root certificate 308 is signed by a CA private key. The CA private key is not stored on the DIMM 300.

The next certificate in the chain is the Attribute certificate 304. The Attribute Certificate 304 includes a DIMM Attribute certificate serial number 302 (also referred to as a memory module attribute number 302) that is unique to the DIMM 300. The DIMM attribute serial number 302 is generated by a cryptographic hash function by creating a hash using selected portions of SPD data and serial numbers assigned to components on the memory module 100. The DIMM attribute serial number 302 can also be referred to as a memory module attribute serial number or a DIMM manufacturer certificate. A private key 306 used by the cryptographic hash function is provisioned during manufacture of the DIMM 300. The attribute certificate 304 is signed by the attribute key private key 2 306. The Attribute Certificate 304 includes public key 2 318 that is associated with Private Key 2 306. The attribute certificate 304 is created and signed by Private Key 2 306 during the manufacture of the DIMM 300. Private Key 2 306 is not stored on DIMM 300, it is maintained securely by the manufacturer of the DIMM 300.

The last certificate in the chain is the leaf certificate 310 that includes a DIMM (vendor) serial number. The leaf Certificate 310 includes Public Key 3 320 that is associated with Private Key 3 314. The leaf certificate 310 is signed by Private Key 3 314. The leaf certificate 310 is created and signed during the manufacture of DIMM 300. Private Key 3 314 is stored in the DIMM 300 and is used for the challenge response protocol and to sign the GET_MEASUREMENTS output.

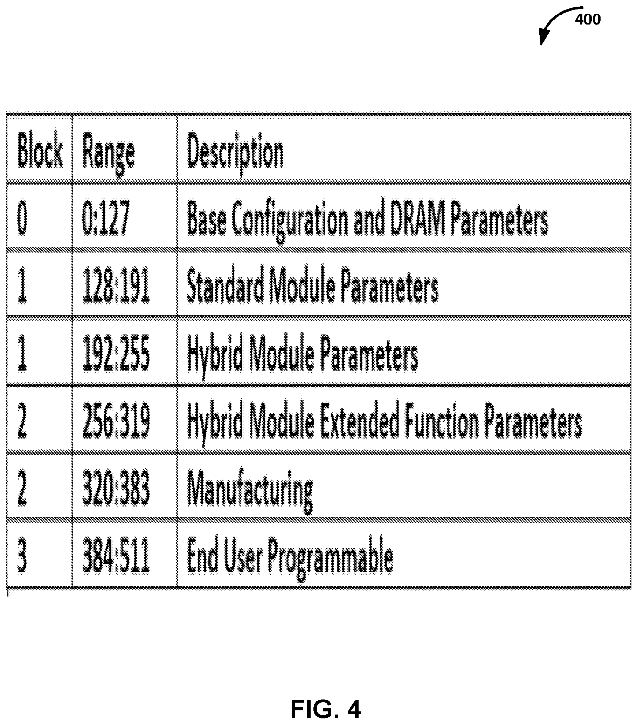

FIG. 4 is a block diagram illustrating the organization of SPD data 400 stored in the SPD hub 102. The SPD data 400 provides critical information about the memory module 100 and is used by a system's Built In Operating System (BIOS) to initialize and configure channels in the memory module 100.

The SPD data 400 is stored in a 512-byte non-volatile memory that includes four 128-byte blocks (labeled block 0-3). The SPD data 400 represents memory module attributes. The non-volatile memory to store attributes for the plurality of memory devices on the memory module 100 and the memory module 100. In other embodiments, the non-volatile memory can store more or less than 512 bytes. In an embodiment, the SPD data 400 is stored in a 512-byte Electronically Erasable Programmable Read Only Memory (EEPROM).

The 128-bytes in block 0 (labeled bytes 0-127) store the base configuration and DRAM parameters. The first 64 bytes (labeled bytes 128-191) in block 1 store standard memory module parameters. The second 64 bytes (labeled bytes195-255) in block 1 store hybrid memory module parameters. The first 64 bytes (labeled bytes 256-319) in block 1 store hybrid module extended function parameters. The second 64 bytes (labeled bytes 320-383) in block 1 store manufacturing information. The 128-bytes in block 3 (labeled bytes 384-511) store end user programmable information.

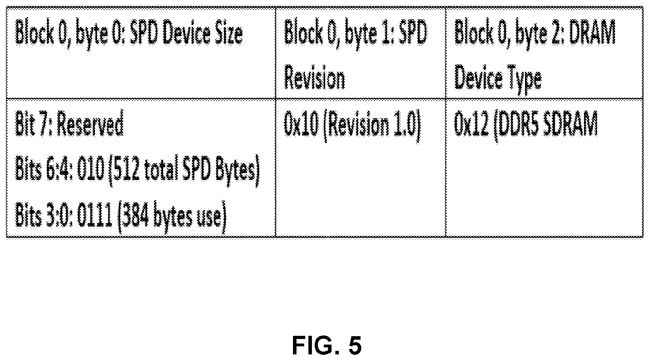

FIG. 5 is a block diagram illustrating an example of the SPD data stored in the first three bytes of block 0 in SPD data 400 shown in FIG. 4.

The first byte (labeled byte 0) stores the size of the SPD device 122. Bits [3:0] store an indication of the number of bytes used in the SPD device 122. In the example shown, 384 bytes are used as shown in Fig. 3. Bits [3:0] store 0111 (binary representation) indicating 384 bytes are used. Bits [6:4] store an indication of the total number of bytes available to store SPD data 400 in the SPD device 122. In the example shown, 512 bytes are available as shown in Fig. 4. Bits [6:4] store 010 (binary representation) indicating 512 bytes are available.

The second byte (labeled byte 1) stores the SPD revision. In the example shown, the SPD revision is 1.0 and is represented by 10 (0x10 (hexadecimal representation), (00010000 (binary representation)).

The third byte (labeled byte 2) stores the DRAM device type. In the example shown, the DRAM device type is a JEDEC DDR5 SDRAM and is represented by 12 (0x12 (hexadecimal representation)), (00010010 (binary representation)).

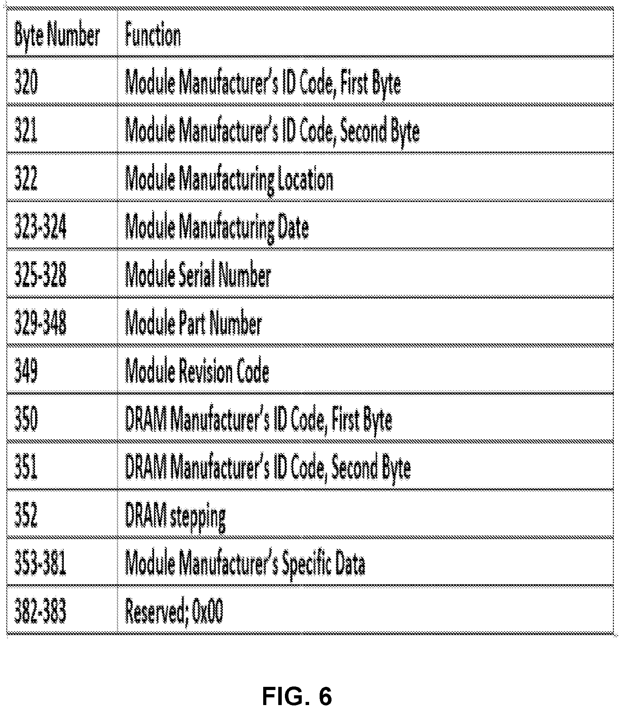

FIG. 6 is a block diagram illustrating an example of the SPD data stored in bytes 320-383 in block 2. The module serial number assigned to the memory module 100 is stored in bytes 325-328. Certificates are cryptographically signed by manufacturers and used for attestation to verify authenticity and provenance of the devices containing those certificates.

The DIMM attribute serial number 302 that is unique to the memory module 100 in the attribute certificate 304 for the DIMM is generated by a hash algorithm by creating a hash value using selected portions of the SPD data and serial numbers assigned to components on the memory module 100. The selected portions of the SPD data are bytes 0-383 in blocks 0, 1 and 2 as shown in FIG. 3 omitting any bytes in blocks 0, 1 and 2 that store certificate chains.

The DIMM attribute serial number 302 is generated by the hash algorithm at the time that the DIMM is manufactured and is stored in the attribute certificate 304. In an embodiment, the hash algorithm is Secure Hash Algorithm-384 (SHA-384). SHA-384 is a one-way cryptographic hash function with a digest (hash value) that is 384-bits. In other embodiments, the output of the hash algorithm can be signed or encrypted by the Elliptic Curve Digital Signature Algorithm (EC-DSA) or Rivest-Shamir-Adleman (RSA).

The serial numbers of components in the memory module 100 are stored in the SPD hub 102 as part of the certificate. The components in the memory module 100 for which serial numbers are stored include DRAM devices 104-1,..104-8, the registering clock driver (RCD) 106, the SPD Hub 102, Power Management controller (PMIC) 108, 110, and a data buffer (for example, used on a buffered DIMM).

This creates a binding of all components in the DIMM and a unique identifier for the DIMM (DIMM Attribute Serial Number 302). The purpose of this binding is to prevent supply chain attacks where DRAM chips or other components such as sensors are swapped for counterfeited ones and affect the reliability of the DIMM.

The addition of the SPD Hub data as part of the cryptographic hash that derives the DIMM attribute serial number 302 in the Attribute Certificate 304 creates a unique per-memory module serial number that binds the DIMM attribute serial number 304 to the SPD data representing memory module attributes such as memory type, timing parameters, number of DRAM banks, memory module configuration, memory module density and interface voltage level. In addition, to the memory module certificate binding to memory module attributes, the addition of the SPDM protocol binding to the sideband bus 116 and the DRAM bus 118 provides a framework to authenticate the memory module 100 and trust its reported attributes creating a foundation for link protection.

Access to memory module attributes stored in the memory module 100 via the DRAM bus 118 allows direct access by a CPU in the system instead of obtaining them indirectly via the SPD hub 102. The memory module attributes that can be obtained via the DRAM bus 118 include data buffers, DRAM devices and the RCD 106. Attributes for other components on the memory module 100, for example, PMICs 108, 110 are obtained from the SPD hub 102 via the sideband bus 116.

The addition of selected portions of SPD data as part of the cryptographic hash to generate the DIMM Attribute Serial number 302 ensures a binding between the data stored in the SPD Hub 102 and serial identifiers for components on the DIMM. This prevents a common counterfeit DIMM scenario when the data in the SPD Hub 102 is modified after manufacturing to falsely claim higher capacity or different timing parameters. Changes in thermal and voltage values can also be modified to make DIMMs vulnerable to attacks. Attacks can be related to parameters in the DIMM. For example, memory aliasing in which more is reported than is present in the DIMM resulting in two different system addresses mapping to same location, changing refresh timing or voltage parameters make the DIMM more susceptible to row hammer or make mitigations less effective, data injection/accelerated wear by modifying operating voltage/thermal parameters.

The addition of selected portions of SPD data 122 as part of the cryptographic hash to generate the DIMM Attribute Serial number 302 also binds the DIMM parameters to a verifiable serial number. Verifying parameters in a DIMM is vital when implementing protections and mitigations against row hammer or aliasing attacks that are dependent on correctly identifying and verifying DIMM parameters such as frequency, refresh time, and size.

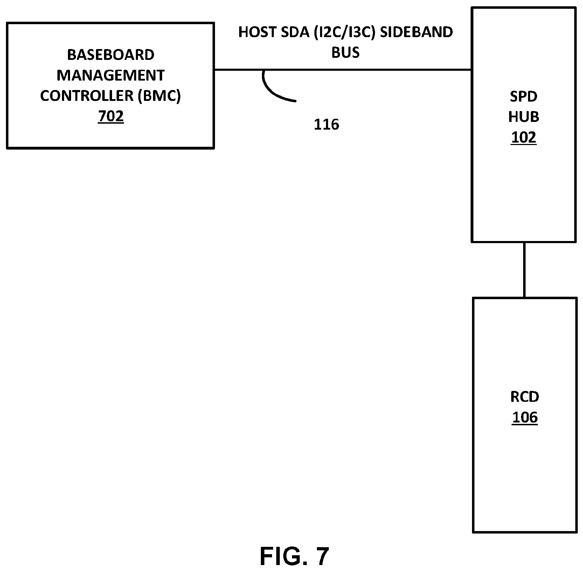

FIG. 7 is a block diagram illustrating the SPD hub 102, RCD 106 and sideband bus 116 in the memory module 100 shown in FIG. 1. The sideband bus 116 is coupled to a Baseband Management Controller (BMC) 702. The BMC 702 is a microcontroller embedded on the motherboard of a system that manages the interface between system-management software and platform hardware.

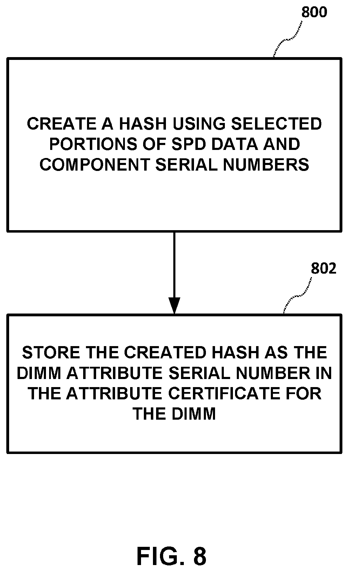

FIG. 8 is a flowgraph illustrating a method to generate an Attribute Serial Number 302 for the memory module 100.

At block 800, create a hash using selected portions of the SPD data 102 and serial numbers assigned to each of the components on the memory module 100.

At block 802, store the created hash as the DIMM attribute serial number 302 in the Attribute Certificate 304 in the SPD data 122 in the SPD hub 102.

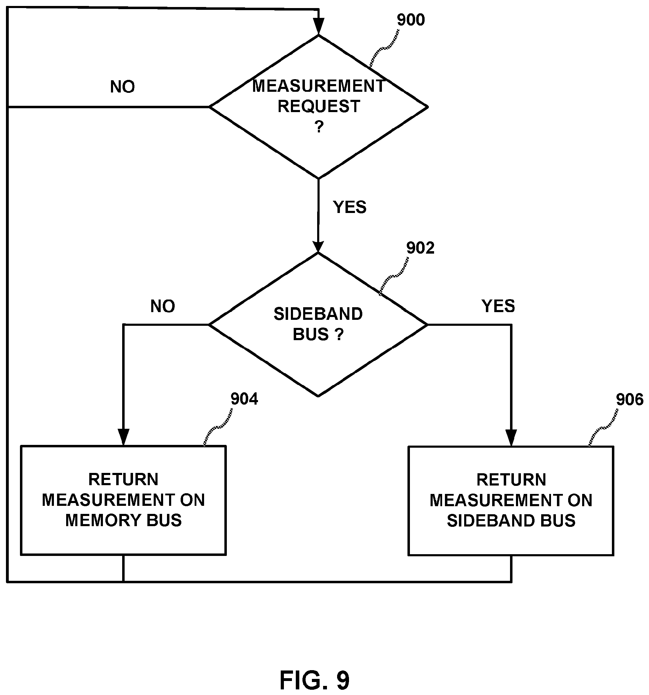

FIG. 9 is a flowgraph illustrating a method to measure the SPD Hub 102 and components in the memory module 100 to authenticate and attest the memory module 100. Measurements for any components in the memory module 100 provides the ability to verifiably identify each component and its attributes. Measurements of immutable (or mutable only through a manufacturer-controlled process) objects create a unique device identity. These measurements can be obtained as raw values or a cryptographic hash of the raw values, both of these provide a unique value for each component on demand in response to a request sent from the Host BIOS or the BMC 702 to the memory module 100 to verify that components on the memory module 100 are authentic.

Measurements are especially important to verify mutable parts of the memory module 100, that is, a component that stores data that can be updated or changed post-manufacturing such as firmware through a firmware update. Updated firmware, for example, cannot typically be verified through certificate chains and cannot be used to generate device identities such as serial identifiers. Firmware needs to be measured on-request and compared against a reference measurement provided by the manufacturer or firmware developer so that the current version of the firmware or current patch or upgrade is verified and integrity protected.

The host can request attributes from DRAM chips and other components on the memory module 100 directly using the GET_MEASUREMENT request and MEASUREMENT response in the Distributed Management Task Force(DMTF) Security Protocol and Data Model (SPDM) standard. The measurements returned in the MEASUREMENT response can be used by the host to verity integrity or authenticity of a DRAM chip or other component in the memory module 100.

The SPD Hub 102 communicates with the host via the sideband bus 116. The host communicates with the plurality of DRAM devices 104-1,..104-8 via the DRAM bus 118. Obtaining these measurements via the memory bus 118 removes the SPD Hub from the trust boundary and adds additional assurance for systems with strict security objectives. The GET_MEASUREMENT request is transmitted over the memory bus 118 to the DRAM devices 104-1,..104-8, and the RCD 106. Obtaining these measurements via the sideband enables measuring other components in the memory module 100 and provides integrity to the user programmable portion of the SP Hub (for example, Block 3).

The framework for requesting measurements and measuring all components in the memory module 100 allows the host system to verify the serial numbers of components on the memory module 100 and other attributes of the memory module 100 at any time. The ability to measure components provides integrity protection for memory modules, such as persistent memory DIMMs. that contain mutable components such as firmware or user configurations.

At block 900, upon receiving a measurement request, processing continues with block 902. At block 902, if the request is received via the sideband bus 116, processing continues with block 906. If the request is received via the memory bus 118, processing continues with block 904.

At block 904, a SPDM GET_MEASUREMENTS request is sent over the DRAM bus 118 to enable measuring the SPD Hub 102 and other components in the memory module 100 in order to authenticate and attest the memory module 100. The GET_MEASURMENTS request message includes a 32-byte random value (referred to as a Nonce) that is chosen by the requester and included by the responder in the MEASUREMENT response. In response, the memory module 100 sends a MEASUREMENT response message that includes number of measurements (for example, all of the measurement blocks or one of the measurement blocks), length (number of bytes in the measurement blocks), the 32 byte Nonce in the SPDM GET_MEASUREMENTS request, and the measurement blocks The host verifies the Nonce and verifies that the measurements in the measurement blocks match expected values.

At block 906, a SPDM GET_MEASUREMENTS request is sent over the sideband bus to enable measuring the SPD Hub and components in the memory module 100 in order to authenticate and attest the memory module 100. The GET_MEASUREMENTS request message includes a Nonce. In response, the SPD hub sends a MEASUREMENT response message that includes number of measurements, length, Nonce, measurement blocks and signature. The host verifies the signature and verifies that the measurements match expected values.

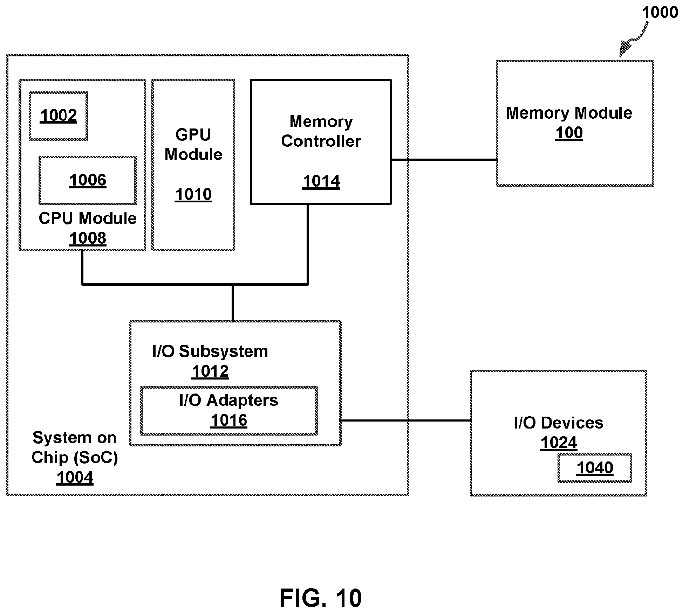

Fig. 10 is a block diagram of an embodiment of a computer system 1000 that includes memory module 100. Computer system 1000 can correspond to a computing device including, but not limited to, a server, a workstation computer, a desktop computer, a laptop computer, and/or a tablet computer.

The computer system 1000 includes a system on chip (SOC or SoC) 1004 which combines processor, graphics, memory, and Input/Output (I/O) control logic into one SoC package. The SoC 1004 includes at least one Central Processing Unit (CPU) module 1008, a volatile memory controller 1014, and a Graphics Processor Unit (GPU) 1010. In other embodiments, the volatile memory controller 1014 can be external to the SoC 1004. The CPU module 1008 includes at least one processor core 1002, and a level 2 (L2) cache 1006.

Although not shown, each of the processor core(s) 1002 can internally include one or more instruction/data caches, execution units, prefetch buffers, instruction queues, branch address calculation units, instruction decoders, floating point units, retirement units, etc. The CPU module 1008 can correspond to a single core or a multi-core general purpose processor, such as those provided by Intel^{®} Corporation, according to one embodiment.

The Graphics Processor Unit (GPU) 1010 can include one or more GPU cores and a GPU cache which can store graphics related data for the GPU core. The GPU core can internally include one or more execution units and one or more instruction and data caches. Additionally, the Graphics Processor Unit (GPU) 1010 can contain other graphics logic units that are not shown in Fig. 10, such as one or more vertex processing units, rasterization units, media processing units, and codecs.

Within the I/O subsystem 1012, one or more I/O adapter(s) 1016 are present to translate a host communication protocol utilized within the processor core(s) 1002 to a protocol compatible with particular I/O devices. Some of the protocols that adapters can be utilized for translation include Peripheral Component Interconnect (PCI)-Express (PCIe); Universal Serial Bus (USB); Serial Advanced Technology Attachment (SATA) and Institute of Electrical and Electronics Engineers (IEEE) 1594 "Firewire".

The I/O adapter(s) 1016 can communicate with external I/O devices 1024 which can include, for example, user interface device(s) including a display and/or a touch-screen display 1040, printer, keypad, keyboard, communication logic, wired and/or wireless, storage device(s) including hard disk drives ("HDD"), solid-state drives ("SSD"), removable storage media, Digital Video Disk (DVD) drive, Compact Disk (CD) drive, Redundant Array of Independent Disks (RAID), tape drive or other storage device. The storage devices can be communicatively and/or physically coupled together through one or more buses using one or more of a variety of protocols including, but not limited to, SAS (Serial Attached SCSI (Small Computer System Interface)), PCIe (Peripheral Component Interconnect Express), NVMe (NVM Express) over PCIe (Peripheral Component Interconnect Express), and SATA (Serial ATA (Advanced Technology Attachment)). The display 1040 to display data stored in the plurality of memory devices in the memory module 100.

Additionally, there can be one or more wireless protocol I/O adapters. Examples of wireless protocols, among others, are used in personal area networks, such as IEEE 802.15 and Bluetooth, 4.0; wireless local area networks, such as IEEE 802.11-based wireless protocols; and cellular protocols.

The ability to mitigate various supply chain attacks is provided by binding the SPD Hub content to the DIMM Certificate (DIMM attribute serial number 302) that is used for authentication. Due to cryptographic signatures, the DIMM certificate is trusted by the platform so the binding of DIMM attributes to the DIMM certificate creates a secure way to ensure the DIMM components have not been tampered with and that the reported attributes of the DIMM are true. This enables effective mitigation for common memory attacks such as Address Aliasing and Row hammer that are dependent on DIMM attributes. It also mitigates supply chain attacks where discarded DIMMs are reused and repackaged as new, DRAM integrated circuits are swapped from DIMMs, and a DIMM's SPD Hub content is modified to report incorrect information and attributes about the DIMM. In addition, authentication and attestation of DIMMs is enabled, which is the foundation for link encryption and protection.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

## Claims

1. A memory module comprising:
a plurality of memory devices; and
a sideband bus device hub comprising a non-volatile memory, the non-volatile memory to store attributes for the plurality of memory devices and the memory module, serial numbers for the plurality of memory devices and a memory module attribute number, the memory module attribute number generated based on the attributes for the plurality of memory devices and the memory module and the serial numbers for the plurality of memory devices stored in a portion of the non-volatile memory, wherein the memory module attribute number is generated using a cryptographic hash function by creating a hash using selected portions of Serial Presence Detect, SPD, data and using the serial numbers assigned to each of the plurality of memory devices on the memory module.

2. The memory module of Claim 1, wherein the cryptographic hash function is signed using a private key that is provisioned during manufacture of the memory module.

3. The memory module of Claim 1, wherein the memory module is a Dual Inline Memory Module (DIMM).

4. The memory module of Claim 1, wherein the sideband bus device hub comprises a serial bus to communicate with a Baseband Management Controller (BMC) coupled to the memory module.

5. The memory module of Claim 4, wherein the serial bus is an I3C serial bus.

6. The memory module of Claim 1 further comprising:
a host memory bus, the memory module to return the attributes for the plurality of memory devices and the memory module over the host memory bus in response to a request received from a host coupled to the host memory bus.

7. The memory module of Claim 1, further comprising:
a serial bus, the memory module to return the attributes for the plurality of memory devices and the memory module over the serial bus in response to a request received from a Baseband Management Controller (BMC) coupled to the serial bus.

8. The memory module of Claim 1, wherein the memory module attribute number is generated prior to use of the memory module in a system.

9. The memory module of Claim 8, wherein the memory module attribute number is 384-bits.

10. A method comprising:
storing, in a non-volatile memory in a sideband bus device hub, attributes for a plurality of memory devices and a memory module, serial numbers for the plurality of memory devices and a memory module attribute number, the memory module attribute number generated based on the attributes for the plurality of memory devices and the memory module and the serial numbers for the plurality of memory devices stored in a portion of the non-volatile memory, wherein the memory module attribute number is generated by a cryptographic hash function by creating a hash using selected portions of Serial Presence Detect, SPD, data and using the serial numbers assigned to each of the plurality of memory devices on the memory module.

11. The method of Claim 10, further comprising:
returning the attributes for the plurality of memory devices and the memory module over a serial bus in response to a request received from a Baseband Management Controller (BMC) coupled to the serial bus.

12. An apparatus comprising means for performing the methods of any one of claims 10 to 11.

13. A machine readable medium including code, when executed, to cause a machine to perform the method of any one of claims 10 to 11.

## Patentansprüche

1. Speichermodul, das Folgendes umfasst:
mehrere Speichervorrichtungen; und
einen Seitenbandbusvorrichtungs-Hub, der einen nichtflüchtigen Speicher umfasst, wobei der nichtflüchtige Speicher Attribute für die mehreren Speichervorrichtungen und das Speichermodul, Seriennummern für die mehreren Speichervorrichtungen und eine Speichermodulattributnummer speichert, wobei die Speichermodulattributnummer basierend auf den Attributen für die mehreren Speichervorrichtungen und das Speichermodul und den Seriennummern für die mehreren Speichervorrichtungen erzeugt wird, die in einem Teil des nichtflüchtigen Speichers gespeichert sind, wobei die Speichermodulattributnummer unter Verwendung einer kryptografischen Hash-Funktion durch Erzeugen eines Hash unter Verwendung ausgewählter Teile von Serial-Presence-Detect- bzw. SPD-Daten und unter Verwendung der Seriennummern, die jeder der mehreren Speichervorrichtungen auf dem Speichermodul zugewiesen sind, erzeugt wird.

2. Speichermodul nach Anspruch 1, wobei die kryptographische Hash-Funktion unter Verwendung eines privaten Schlüssels signiert ist, der während der Herstellung des Speichermoduls bereitgestellt wird.

3. Speichermodul nach Anspruch 1, wobei das Speichermodul ein doppelseitig bestücktes Speichermodul (DIMM - Dual Inline Memory Module) ist.

4. Speichermodul nach Anspruch 1, wobei der Seitenbandbusvorrichtungs-Hub einen seriellen Bus zum Kommunizieren mit einer mit dem Speichermodul gekoppelten Basisbandverwaltungssteuerung (BMC - Baseband Management Controller) umfasst.

5. Speichermodul nach Anspruch 4, wobei der serielle Bus ein serieller I3C-Bus ist.

6. Speichermodul nach Anspruch 1, das ferner Folgendes umfasst:
einen Host-Speicherbus, wobei das Speichermodul die Attribute für die mehreren Speichervorrichtungen und das Speichermodul als Reaktion auf eine von einem mit dem Host-Speicherbus gekoppelten Host empfangene Anforderung über den Host-Speicherbus zurückgibt.

7. Speichermodul nach Anspruch 1, das ferner Folgendes umfasst:
einen seriellen Bus, wobei das Speichermodul die Attribute für die mehreren Speichervorrichtungen und das Speichermodul als Reaktion auf eine von einem mit dem seriellen Bus gekoppelten Basisbandverwaltungssteuerung (BMC - Baseband Management Controller) empfangene Anforderung über den seriellen Bus zurückgibt.

8. Speichermodul nach Anspruch 1, wobei die Speichermodulattributnummer vor der Verwendung des Speichermoduls in einem System erzeugt wird.

9. Speichermodul nach Anspruch 8, wobei die Speichermodulattributnummer 384 Bit enthält.

10. Verfahren, das Folgendes umfasst:
Speichern, in einem nichtflüchtigen Speicher in einem Seitenbandbusvorrichtungs-Hub, von Attributen für mehrere Speichervorrichtungen und ein Speichermodul, Seriennummern für die mehreren Speichervorrichtungen und eine Speichermodulattributnummer, wobei die Speichermodulattributnummer basierend auf den Attributen für die mehreren Speichervorrichtungen und das Speichermodul und den Seriennummern für die mehreren Speichervorrichtungen erzeugt wird, die in einem Teil des nichtflüchtigen Speichers gespeichert sind, wobei die Speichermodulattributnummer durch eine kryptografische Hash-Funktion durch Erzeugen eines Hash unter Verwendung ausgewählter Teile von Serial-Presence-Detect- bzw. SPD-Daten und unter Verwendung der Seriennummern, die jeder der mehreren Speichervorrichtungen auf dem Speichermodul zugewiesen sind, erzeugt wird.

11. Verfahren nach Anspruch 10, das ferner Folgendes umfasst:
Zurückgeben der Attribute für die mehreren Speichervorrichtungen und das Speichermodul als Reaktion auf eine von einem mit dem seriellen Bus gekoppelten Basisbandverwaltungssteuerung (BMC - Baseband Management Controller) empfangene Anforderung über einen seriellen Bus.

12. Einrichtung, die Mittel zum Durchführen der Verfahren nach einem der Ansprüche 10 bis 11 umfasst.

13. Maschinenlesbares Medium, das einen Code beinhaltet, der bei Ausführung bewirkt, dass eine Maschine das Verfahren nach einem der Ansprüche 10 bis 11 durchführt.

## Revendications

1. Module de mémoire, comprenant :
une pluralité de dispositifs de mémoire ; et
un concentrateur de dispositif bus à bande latérale comprenant une mémoire non volatile, la mémoire non volatile étant destinée à stocker des attributs pour la pluralité de dispositifs de mémoire et le module de mémoire, des numéros de série pour la pluralité de dispositifs de mémoire et un numéro d'attribut de module de mémoire, le numéro d'attribut de module de mémoire étant généré sur la base des attributs pour la pluralité de dispositifs de mémoire et le module de mémoire et les numéros de série pour la pluralité de dispositifs de mémoire étant stockés dans une partie de la mémoire non volatile, dans lequel le numéro d'attribut de module de mémoire est généré en utilisant une fonction de hachage cryptographique en créant un hachage en utilisant des parties sélectionnées de données de détection de présence série, Serial Presence Detect SPD, et en utilisant les numéros de série attribués à chacun de la pluralité de dispositifs de mémoire sur le module de mémoire.

2. Module de mémoire de la revendication 1, dans lequel la fonction de hachage cryptographique est signée en utilisant une clef privée qui est fournie durant la fabrication du module de mémoire.

3. Module de mémoire de la revendication 1, dans lequel le module de mémoire est un module de mémoire à double rangée de connexions, Dual Inline Memory Module DIMM.

4. Module de mémoire de la revendication 1, dans lequel le concentrateur de dispositif bus à bande latérale comprend un bus série destiné à communiquer avec un contrôleur de gestion de bande de base, Baseband Management Controller BMC, couplé au module de mémoire.

5. Module de mémoire de la revendication 4, dans lequel le bus série est un bus série I3C.

6. Module de mémoire de la revendication 1, comprenant en outre :
un bus de mémoire hôte, le module de mémoire étant destiné à renvoyer les attributs pour la pluralité de dispositifs de mémoire et le module de mémoire par le biais du bus de mémoire hôte en réponse à une demande reçue en provenance d'un hôte couplé au bus de mémoire hôte.

7. Module de mémoire de la revendication 1, comprenant en outre :
un bus série, le module de mémoire étant destiné à renvoyer les attributs pour la pluralité de dispositifs de mémoire et le module de mémoire par le biais du bus série en réponse à une demande reçue en provenance d'un contrôleur de gestion de bande de base, Baseband Management Controller BMC, couplé au bus série.

8. Module de mémoire de la revendication 1, dans lequel le numéro d'attribut de module de mémoire est généré avant l'utilisation du module de mémoire dans un système.

9. Module de mémoire de la revendication 8, dans lequel le numéro d'attribut de module de mémoire est de 384 bits.

10. Procédé, comprenant :
le stockage, dans une mémoire non volatile dans un concentrateur de dispositif bus à bande latérale, d'attributs pour une pluralité de dispositifs de mémoire et un module de mémoire, de numéros de série pour la pluralité de dispositifs de mémoire et d'un numéro d'attribut de module de mémoire, le numéro d'attribut de module de mémoire étant généré sur la base des attributs pour la pluralité de dispositifs de mémoire et le module de mémoire et les numéros de série pour la pluralité de dispositifs de mémoire étant stockés dans une partie de la mémoire non volatile, dans lequel le numéro d'attribut de module de mémoire est généré par une fonction de hachage cryptographique en créant un hachage en utilisant des parties sélectionnées de données de détection de présence série, Serial Presence Detect SPD, et en utilisant les numéros de série attribués à chacun de la pluralité de dispositifs de mémoire sur le module de mémoire.

11. Procédé de la revendication 10, comprenant en outre :
le renvoi des attributs pour la pluralité de dispositifs de mémoire et le module de mémoire par le biais d'un bus série en réponse à une demande reçue en provenance d'un contrôleur de gestion de bande de base, Baseband Management Controller BMC, couplé au bus série.

12. Appareil, comprenant des moyens pour réaliser les procédés de l'une quelconque des revendications 10 et 11.

13. Support lisible par machine incluant un code, lorsqu'il est exécuté, pour amener une machine pour réaliser le procédé de l'une quelconque des revendications 10 et 11.
